# EUROPÄISCHE PATENTSCHRIFT

(11) **EP 1 736 227 B1**
(45) Veröffentlichungstag und Bekanntmachung des Hinweises auf die Patenterteilung: **17.02.2010**
(21) Anmeldenummer: 06115290.6
(22) Anmeldetag: 12.06.2006
(51) Int. Cl.: B01D 46/24, B01D 46/52

(54) **Filterdichtsystem**
Filter sealing system
Système d'étanchéité d'un filtre

(30) Priorität: 24.06.2005 DE 102005029750
(43) Veröffentlichungstag der Anmeldung: 27.12.2006
(73) Patentinhaber: MANN+HUMMEL GmbH, 71638 Ludwigsburg (DE)
(72) Erfinder: Amesöder, Dieter, 74321 Bietigheim-Bissingen (DE); Fleck, Sabine, 76275 Ettlingen (DE); Trautmann, Pius, 84130 Dingolfing (DE)

(56) Entgegenhaltungen:
- EP-A- 1 159 052
- WO-A-2004/020075
- WO-A-2006/012386

## Beschreibung

### Technisches Gebiet

Die Erfindung betrifft ein Luftfilterelement gemäß der Gattung des Patentanspruchs 1. Weiterhin betrifft die Erfindung ein Verfahren zur Wartung eines Luftfilters mit einem erfindungsgemäßen Luftfilterelement gemäß der Gattung des Patentanspruchs 7.

### Stand der Technik

Filterelemente mit axialer Durchströmung werden in vielen Bereichen eingesetzt, in denen es gilt, ein Gas oder eine Flüssigkeit zu filtrieren. Diese Elemente werden hierzu in jeglicher Art von Gehäusen eingesetzt und müssen bestimmungsgemäß nach dem Erreichen einer bestimmten Ladung oder nach vorgegebenen Wartungsintervallen ersetzt oder gereinigt werden. Die EP 1 159 052 zeigt ein Filterelement mit einer Rahmenkonstruktion, welche im Bereich einer der Stirnseiten ringförmig mit der Mantelfläche des Filterelements verbunden ist und eine Verlängerung besitzt, welche axial über die Stirnseite hinausragt. Auf der Verlängerung ist wiederum ein Dichtungselement angeordnet, welches zumindest teilweise um die äußere Umfangsfläche der Verlängerung positioniert ist. Dadurch wird eine dichte Verbindung mit der Innenfläche eines Luftfiltergehäuses gewährleistet. Nachteilig ist hierbei, dass die Innenfläche der Rahmenkonstruktion zur Befestigung an der Mantelfläche des Filterelementes keine Durchmesserabweichung vom Außendurchmesser der Mantelfläche aufweisen darf, da es ansonsten zu einer Verbindung zwischen Roh- und Reinseite des Filterelements kommen kann. Daher müssen hier sehr geringe Fertigungstoleranzen auf Seiten der Rahmenkonstruktion und auf Seiten des Filterelementmantels eingehalten werden, was mit erhöhten Kosten verbunden ist.

Aufgabe der Erfindung ist es daher, ein Dichtsystem für ein axial durchströmtes Filterelement zu schaffen, welches die oben genannten Nachteile umgeht und einfach und kostengünstig in der Handhabung und der Herstellung ist. Diese Aufgabe wird durch die Merkmale der Patentanspruchs 1 und 7 gelöst.

### Offenbarung der Erfindung

Das erfindungsgemäße Filterelement für einen Fluidstrom zur stirnseitigen Anströmung weist ein axial durchströmtes Filtermedium, Mittel zur Abdichtung der Anströmseite von der Abströmseite des Filterelementes an der Außenseite des Filtermediums und vorzugsweise einen zentral im Filterelement angeordneten Stützkörper auf. Das Filtermedium weist hierbei abwechselnd angeordnete flache und gefaltete Filterlagen auf, wobei die flache Lage mit der gefalteten Lage im Wechsel derart angeordnet ist, dass sich Kanäle mit offenem, insbesondere dreieckigem, Querschnitt ergeben. Die sich hieraus ergebenden Kanäle werden nun stirnseitig wechselseitig verschlossen, so dass das zu filternde Fluid bei der Durchströmung des Filterelementes von einer Anströmseite - gebildet durch eine Stirnseite des Filterelementes - zu einer Abströmseite - gebildet durch dessen andere Stirnseite - eine der genannten Lagen, die zur Filterung des Fluides vorgesehen sind, durchtreten muss. In einer bevorzugten Ausgestaltung ist der Stützkörper zentral in dem Filtermedium angeordnet und dadurch von den Kanälen umgeben, wobei er sich axial im Wesentlichen bis zu wenigstens einer ersten Stirnseite des Filterelementes erstreckt. Die Lagen des Filtermediums sind hierbei bevorzugt aus einem Filterpapier hergestellt, können jedoch auch beispielsweise aus einem vollsynthetischen Medium bestehen. Hier müsste die gefaltete Lage durch eine Imprägnierung des vollsynthetischen Mediums unterstützt werden. Das Filterelement kann dabei eine eckige, runde, elliptische oder ovale Querschnittsform aufweisen, bevorzugt ist es an den Außenkanten rund und zwischen den Außenkanten gerade in Form eines Ovals aufgebaut. Der vorzugsweise verwendete Stützkörper, welcher zentral im Filterelement angeordnet ist, wird bevorzugt im Spritzgießverfahren hergestellt, kann jedoch auch aus einem anderen Material wie Kunststoff und in einem anderen Herstellverfahren hergestellt werden. Durch den wechselseitigen Verschluss der zu durchströmenden Kanäle lässt es sich erreichen, dass durch eine geschickte Anordnung jeweils die vollständige Fläche des umgebenden Filtermediums der ersten anströmseitigen Kanäle durchströmt werden kann, um in die zweiten abströmseitigen Kanäle zu gelangen. Eine Ausnahme bilden hierbei nur die zu äußerst liegenden Kanäle. Zur Abdichtung zwischen einer Anströmseite und einer Abströmseite in einem Gehäuseteil sind Abdichtmittel vorgesehen. Diese beinhalten eine umlaufende Dichtung, wobei die umlaufende Dichtung in Form eines Ringkragens an einer Stirnseite des Filterelements angeordnet ist. Die Dichtung liegt dabei vollumfänglich mit einem axialen Teilabschnitt einerseits an der Mantelfläche des Filterelements an und andererseits mit einer Dichtfläche an einer korrespondierenden Gehäusedichtfläche an. Ein weiterer Teilabschnitt des Ringkragens erstreckt sich axial über die Stirnseite des Filterelements hinweg und ist mit einem Rahmenelement verbunden. Das Rahmenelement kann dabei aus Metall oder aus Kunststoff sein und ist bevorzugt ringförmig ausgestaltet. Es ist jedoch auch möglich das Rahmenelement nur segmentweise mit dem axial überstehenden Teil des Ringkragens zu verbinden, indem das Rahmenelement beispielsweise die Form eines Wagenrades ohne durchgehenden Außenring einnimmt. Durch das Rahmenelement ergibt sich in vorteilhafter Weise eine radiale Abstützung gegen von Außen auf die Dichtung einwirkende Kräfte. Ein weiterer Vorteil ist die hierdurch resultierende Zentrierwirkung des Dichtkragens in einem Gehäuse. Dadurch, dass die Dichtung nun vollständig am Filterelement und an der Gehäusewandung anliegt, kann eine wirksame Abdichtung zwischen An-und Abströmseite sichergestellt werden.

Gemäß der Erfindung besteht die umlaufende Dichtung bzw. der umlaufende Dichtungskragen aus einem Elastomer und ist an die Mantelfläche des Filterelements angegossen oder angespritzt. Durch diese Art der Verbindung zwischen Dichtung und Mantelfläche des Filterelementes ist eine vollständige Abdichtung zwischen Anström- und Abströmseite sichergestellt. Durch die Verwendung eines Elastomers für die Dichtung sind eine sichere Zentrierung im Gehäuse und eine zuverlässige Abdichtung auch bei Toleranzunterschieden zwischen Dichtungsdichtfläche und Dichtfläche des Gehäuses gewährleistet. Das Elastomer kann sich durch die Elastizität an Ungenauigkeiten in der Dichtfläche des Gehäuses anpassen, wobei die durchgehende Anlage an der Dichtfläche des Gehäuses durch die Kompressibilität der Elastomerdichtung besonders ausgeprägt ist.

Bei an die Mantelfläche des Filterelements angegossener oder angespritzter Dichtung ist das Rahmenelement an wenigstens zwei Seiten in der Dichtung eingebettet und formschlüssig mit ihr verbunden. Das Rahmenelement, welches bevorzugt aus Kunststoff oder Metall besteht, wird hierbei direkt beim Angießen oder Anspritzen der Dichtung an die Mantelfläche mit in diese eingebettet, so dass hier die formschlüssige Verbindung entsteht. Dadurch wird das Rahmenelement verliersicher mit dem Dichtungselement verbunden, und durch den Gieß-oder Spritzgießprozess können Unregelmäßigkeiten einfach ausgeglichen werden.

Gemäß einer vorteilhaften Ausgestaltung der Erfindung besteht die Dichtung aus einem thermoplastischen Elastomer (TPE). Die besonderen Vorteile von TPEs im Bereich der Abdichtung zweier Teile zueinander sind in den einschlägigen Fachbüchern, wie z. B. dem Kunststofftaschenbuch, beschrieben und brauchen deswegen hier nicht weiter erläutert zu werden. Deshalb sollen die in diesen Büchern dargebotenen Informationen zu den thermoplastischen Elastomeren ausdrücklich in den gewürdigten Stand der Technik mit aufgenommen werden.

Alternativ ebenso vorteilhaft ist es, die Dichtung aus einem PU-Schaum auszuführen. Dieser ist sehr stark kompressibel, lässt sich leicht und einfach verarbeiten und wird ebenfalls schon über einen größeren Zeitraum als Dichtmittel im Bereich der Abdichtung von Filterelementen gegenüber Gehäuseteilen verwendet.

Gemäß einer vorteilhaften Ausführungsform der Erfindung steht im Wesentlichen der axial überstehende Teil der Dichtung mit einer hierzu korrespondierenden Fläche eines zur Aufnahme des Filterelements vorgesehenen Gehäuses in dichtem Eingriff. Dabei können dies entweder die radial innenliegende Fläche des Dichtungsringkragens oder die radial außenliegende Fläche des Dichtungsringkragens sein, bevorzugt ist hier die radial außenliegende Fläche des Dichtungsringkragens zu nennen.

Bei der Verwendung der radial außenliegenden Dichtfläche der Dichtung ist es vorteilhaft, wenn diese parallel zur Mantelfläche des Filterelements ausgerichtet ist. Dieses erweist sich besonders dann vorteilhaft, wenn die Gehäuseform der äußeren Form des Filterelementes folgt. Durch die Kompressibilität des elastomeren Dichtungselementes können auch leichte Winkelversätze ausgeglichen werden.

Alternativ hierzu kann die außenliegende Dichtfläche der Dichtung eine sich konisch in Richtung des axialen freien Endes des Ringkragens verjüngende Form aufweisen. In diesem Fall ergibt sich durch die radial konisch zulaufende Form der Dichtungsaußenfläche eine Art Einführschräge, um bei beengten Gehäuseverhältnissen ein sicheres Anliegen der Dichtung im gesamten Bereich der Gehäusedichtfläche sicherzustellen.

Zur Wartung eines Luftfilters mit einem Luftfilterelement wie oben beschrieben wird dieses axial in das Gehäuse eingesetzt, wobei dann der Dichtungsringkragen radial an hierzu korrespondierenden Dichtflächen im Gehäuse zum Anliegen kommt. Hier bietet der Dichtungsringkragen einerseits die Möglichkeit einen Axialanschlag zu schaffen und andererseits nach Erreichen des axialen Anschlags für eine vollständige Sicherung nach dem Austausch des Filterelements zu sorgen.

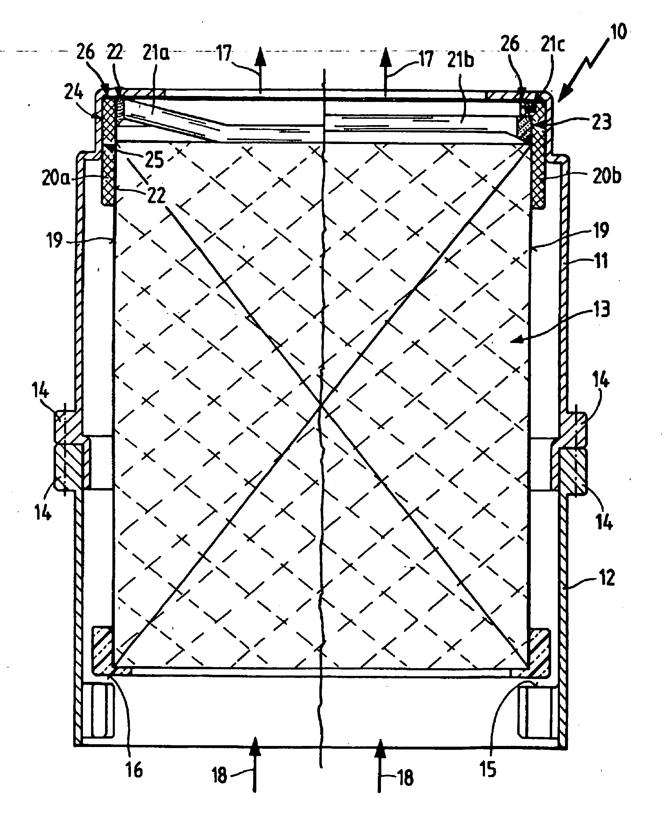

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Kurze Beschreibung der Zeichnungen

Weitere Einzelheiten der Erfindung werden in der Zeichnung anhand von schematischen Ausführungsbeispielen beschrieben. Hierbei zeigt die einzige Figur zwei Ausgestaltungen des Dichtsystems.

### Ausführungsform(en) der Erfindung

Die einzige Figur zeigt einen Luftfilter 10 aufweisend ein oberes Gehäuseteil 11 und ein unteres Gehäuseteil 12 mit einem darin angeordneten Filterelement 13. Das Filterelement 13 ist ein axial durchströmtes Filterelement mit wechselseitig verschlossenen axial verlaufenden Kanälen. Als Filtermedium ist hier bevorzugt Papier, Synthetikmaterial oder ein Vlies zu nennen. Das obere und das untere Gehäuseteil 11, 12 sind über Verbindungsmittel 14 miteinander verbunden. Dabei können die Verbindungsmittel beispielsweise Klips, Schrauben oder sonstige im Stand der Technik bekannte lösbare Verbindungsarten darstellen. Im unteren Bereich des unteren Gehäuseteils 12 wird durch das Gehäuse ein Axialanschlag 15 gebildet, welcher das Filterelement 13 beim Zusammenbau der beiden Gehäuseteile 11. 12 axial stützt und fixiert. Korrespondierend hierzu ist an der unteren Stirnseite des Filterelements 13 im Bereich des Axialanschlags 15 ein bevorzugt umlaufender Anschlagpuffer 16 ausgebildet. Dieser kann beispielsweise aus einem Elastomer, bevorzugt einem PU-Schaum bestehen, welcher direkt an das Filterelement 13 angegossen oder angespritzt wird. Vorteilhaft ergibt sich hierdurch weiterhin eine Schwingungsdämpfung und die Möglichkeit einer guten axialen sowie radialen Fixierung des Filterelements 13. Die Stirnseite des oberen Gehäuseteils bildet einen Luftauslass 17 für die gereinigte Luft, und im unteren Bereich des unteren Gehäuseteils 12 findet der Lufteintritt 18 statt. Das Filtergehäuseteil 12 ist im unteren Bereich nicht geschlossen dargestellt, da es hier möglich ist, unter anderem einen Vorabscheider, beispielsweise über einen Multizyklon, anzuschließen. Für den Fall, dass der Vorabscheider nicht benötigt wird, ist es möglich, den Lufteintritt durch die Stirnseite des unteren Gehäuseteils 12 stattfinden zu lassen oder auch durch einen seitlich unterhalb des Filterelements 13 angeordneten Zutrittskanal. Das Filterelement 13 weist als äußerste Filterlage eine Mantelfläche 19 auf, welche das Filterelement 13 vollumfänglich umschließt. Auf der rechten Seite der Figur ist ein Dichtungsringkragen 20b direkt an die Mantelfläche 19 des Filterelements 13 über ein Gieß- oder Spritzverfahren angeformt. Dadurch ergibt sich ebenfalls eine formschlüssige dichte Verbindung zwischen Dichtungsringkragen 20b und Filterelement 13. An die radial innenliegende Seite des Dichtungsringkragens 20a ist ein Rahmenelement 21 a ebenfalls über eine Klebverbindung 22 angebunden. Dieses Rahmenelement 21 a kann ein umlaufender kreisringförmiger Rahmen sein, es kann jedoch auch ein nur segmentweise mit dem Dichtungsringkragen 20a verbundenes Rahmenelement 21 a darstellen. Dabei kann das Rahmenelement 21 a beispielsweise sternförmig oder polygonförmig aufgebaut sein. Auf der rechten Seite sind zwei alternative Anbringungen von Rahmenelementen 21 b, 21 c dargestellt. Das Rahmenelement 21 b ist in den Dichtungsringkragen 20b mit wenigstens zwei Flächen eingebettet, so dass sich hier ebenfalls eine formschlüssige Verbindung ergibt. Das Rahmenelement 21 b wird hierbei direkt im Fertigungsprozess des Dichtungsringkragens 20b mit eingesetzt. Eine Alternative hierzu bietet das Rahmenelement 21 c, welches nur einen kreisringförmigen Einsatz in den Dichtungsringkragen 20b darstellt. Die Rahmenelemente können hierbei aus Metall oder Kunststoff gefertigt sein. Die Rahmenelemente 21 a, b weisen hierbei noch wagenradähnliche Formen auf, welche zu einer guten Kraftabstützung bei radial von außen einwirkenden Kräften auf den Dichtungsringkragen 20a, b führen. Bei den Rahmenelementen 21 a, b ist es weiterhin möglich, bei der Verwendung eines hier nicht dargestellten Stützkernes innerhalb des Filterelements 13 die Rahmenelemente 21 a, b mit dem Stützkern über ein lösbares Verbindungsverfahren zu verbinden und dadurch eine weitere Steigerung der Abstützung zu erzielen. Die Einbettung des Endes 23 des Rahmenelementes 21 b erfolgt somit direkt im gleichen Fertigungsschritt wie die Anbindung des Dichtungsringkragens 20b an das Filterelement 13. Der Dichtungsringkragen 20a, b fungiert hier in Kombination mit dem oberen Gehäuseteil 11 einerseits als Axialanschlag 26 und andererseits als Radialdichtung über die Kombination einer Dichtfläche 24 des Dichtungsringkragens 20a, b mit einer innenliegenden Dichtfläche 25 des oberen Gehäuseteils 11. Es ist zu erkennen, dass die Dichtfläche im Wesentlichen durch den axial über die Stirnseite des Filterelements 13 überstehenden Teil des Dichtungsringkragens 20a, b erfolgt.

## Patentansprüche

1. Filterelement (13) für einen Fluidstrom zur stirnseitigen Anströmung, aufweisend
- mindestens eine flache Lage und mindestens eine gefaltete Lage, wobei die mindestens eine flache Lage mit der mindestens einen gefalteten Lage im Wechsel derart angeordnet ist, dass sich Kanäle mit offenem, insbesondere dreieckigem Querschnitt ergeben,
- dichte Verschlüsse jeweils der einen ersten Gruppe von Kanälen einerseits und dichte Verschlüsse der restlichen, nicht zu genannter Gruppe zählenden Kanäle einer zweiten Gruppe andererseits derart, dass das zu filternde Fluid bei der Durchströmung des Filterelementes (13) von einer Anströmseite, gebildet durch eine Stirnseite des Filterelementes (13), zu einer Abströmseite, gebildet durch dessen andere Stirnseite, eine der genannten Lagen, die zur Filterung des Fluides vorgesehen ist, durchtreten muss,
- Mittel zur Abdichtung der Anströmseite von der Abströmseite des Filterelementes (13) in einem Gehäuseteil (11),
- wobei sowohl die mindestens eine flache Lage als auch die mindestens eine gefaltete Lage aus durchströmbaren Filtermedien bestehen,
- wobei an jeder den offenen Querschnitt bildenden Seite derjenigen Kanäle der ersten Gruppe, die vom Rand des Filterelementes (13) beabstandet sind, ein Kanal der zweiten Gruppe benachbart ist, so dass die vollständige Fläche der Kanäle der ersten Gruppe bis auf Faltkanten der Kanäle vom Fluid durchströmbar ist, **dadurch, gekennzeichnet, dass** die Mittel zur Abdichtung der Anströmseite von der Abströmseite des Filterelementes (13) in einem Gehäuseteil (11) eine umlaufende Dichtung beinhalten, wobei die umlaufende Dichtung in Form eines Ringkragens (20) an einer Stirnseite des Filterelementes (13) angeordnet ist, über einen axialen Abschnitt mit der Mantelfläche (19) des Filterelementes (13) verbunden ist und wobei ein Teil des Ringkragens (20) sich axial über die Stirnseite des Filterelements (13) hinaus erstreckt und wobei weiterhin ein Rahmenelement (21a, b, c) mit dem axial überstehendem Teil des Ringkragens (20) verbunden ist, derart, dass das Rahmenelement (21 a, b, c) eine Abstützung gegen radial von Außen wirkende Kräfte auf den Ringkragen (20) bewirkt, wobei die umlaufende Dichtung aus einem Elastomer besteht und an die Mantelfläche (19) des Filterelements (13) angegossen oder angespritzt ist, und wobei das Rahmenelement (21 a, b, c) an wenigstens zwei Seiten in der Dichtung eingebettet und formschlüssig mit ihr verbunden ist, derart, dass die Einbettung beim Angießen oder Anspritzen der Dichtung an die Mantelfläche (19) erfolgt.

2. Filterelement nach einem der vorhergehenden Ansprüche, **dadurch gekennzeichnet, dass** die Dichtung aus einem thermoplastischen Elastomer (TPE) besteht.

3. Filterelement nach dem Anspruch 1, **dadurch gekennzeichnet, dass** die Dichtung aus einem PU-Schaum besteht.

4. Filterelement nach einem der vorhergehenden Ansprüche, **dadurch gekennzeichnet, dass** im Wesentlichen der axial überstehende Teil der Dichtung mit einer hierzu korrespondierenden Fläche eines zur Aufnahme des Filterelements (13) vorgesehenen Gehäuses in dichtem Eingriff steht.

5. Filterelement nach einem der vorhergehenden Ansprüche, **dadurch gekennzeichnet, dass** die außenliegende Dichtfläche der Dichtung im Wesentlichen parallel zur Mantelfläche (19) des Filterelements (13) ausgerichtet ist.

6. Filterelement nach einem der Ansprüche 1 bis 5, **dadurch gekennzeichnet, dass** die außenliegende Dichtfläche der Dichtung eine sich konisch in Richtung des axialen freien Endes verjüngende Form aufweist.

7. Verfahren zur Wartung eines Luftfilters aufweisen ein Gehäuse mit einer inneren ringförmigen Dichtfläche, **dadurch gekennzeichnet, dass** ein Filterelement gemäß einem der Ansprüche 1 bis 6 axial in das Gehäuse bis zur Herstellung einer radial dichtenden Verbindung zwischen Filtergehäuse und Dichtungsringkragen des Filterelements eingesetzt wird.

## Claims

1. Filter element (13) for a fluid flow for a frontal oncoming flow, featuring
- at least one flat layer and at least one folded layer, the at least one flat layer being arranged alternately with the at least one folded layer in such a way that channels with open, in particular triangular cross section are formed,
- tight closures each of the first group of channels on the one hand and tight closures of the remaining channels of a second group not belonging to the mentioned group on the other hand in such a way that the fluid to be filtered must pass through the filter element (13) from an on-flow side - formed by a front end of the filter element (13) - to an off-flow side - formed by its other front end - through one of the mentioned layers intended for the filtration of the fluid,
- means for sealing the on-flow side from the off-flow side of the filter element (13) in one housing component (11),
- the at least one flat layer as well as the at least one folded layer consisting of filter media that can be flowed through,
- a channel of the second group being located next to each of the sides that form the open cross-section of those channels of the first group that are disposed at a certain distance from the edge of the filter element (13), so that the fluid can flow through the entire surface of the channels of the first group, except for the folding welts of the channels, **characterized in that** the means for sealing the on-flow side from the off-flow side of the filter element (13) in a housing component (11) include a circumferential sealing, the circumferential sealing being located at a front side of the filter element (13) in the shape of an annular collar (20), connected to the lateral surface (19) of the filter element (13) via an axial section, and one part of the annular collar (20) protruding the front side of the filter element (13) axially, and, moreover, one frame element (21 a, b, c) being connected with the axially protruding part of the annular collar (20) in such a way that the frame element (21 a, b, c) acts as a support against external radial forces acting on the annular collar (20), the circumferential sealing consisting of an elastomer and being integrally cast onto or injection-molded to the lateral surface (19) of the filter element (13), and the frame element (21 a, b, c) being incorporated at at least two sides into the sealing and connected with it in a positive engagement in such a way that the incorporation is realized while the sealing is cast onto or injection-molded to the lateral surface (19).

2. Filter element according to one of the above-mentioned claims, **characterized in that** the sealing is made of a thermoplastic elastomer (TPE).

3. Filter element according to claim 1, **characterized in that** the sealing is made of PU-foam.

4. Filter element according to one of the above-mentioned claims, **characterized in that** basically the axially protruding part of the sealing is sealingly engaged with a corresponding surface of a housing provided for receiving the filter element (13).

5. Filter element according to one of the above-mentioned claims, **characterized in that** the exterior sealing surface of the sealing is basically aligned parallel to the lateral surface (19) of the filter element (13).

6. Filter element according to one of the claims 1 to 5, **characterized in that** the exterior sealing surface of the sealing features a form that tapers conically towards the axially free end.

7. Method for the maintenance of an air filter, featuring a housing with an interior ringshaped sealing surface, **characterized in that** a filter element according to one of the claims 1 to 6 is inserted axially into the housing until a radially sealing connection between the filter housing and the annular sealing collar of the filter element is realized.

## Revendications

1. Elément filtrant (13) pour un flux de fluide destiné à un afflux frontal, présentant
- au moins une couche plate et au moins une couche pliée, au moins une couche plate étant disposée en alternance avec au moins une couche pliée de telle sorte que des canaux avec une section ouverte, en particulier triangulaire, soient formés,
- des fermetures étanches respectivement du premier groupe de canaux d'une part et des fermetures étanches des canaux restants non compris dans le groupe mentionné d'un deuxième groupe d'autre part, de manière à ce que le fluide à filtrer doive, lorsqu'il coule à travers l'élément filtrant (13) d'un côté d'afflux formé par une face frontale de l'élément filtrant (13) vers un côté d'écoulement formé par son autre face frontale, traverser l'une des couches mentionnées qui est destinée à filtrer le fluide,
- des moyens permettant d'étancher le coté d'afflux du côté d'écoulement de l'élément filtrant (13) dans une partie du boîtier (11),
- aussi bien au moins la couche plate qu'au moins la couche pliée se composant de milieux filtrants pouvant être traversés par des fluides,
- un canal du deuxième groupe étant avoisinant de chaque côté des canaux du premier groupe se trouvant à une certaine distance du bord de l'élément filtrant (13) formant la section ouverte, de sorte que la surface complète des canaux du premier groupe, à l'exception des bords de pliage des canaux, puisse être traversée par le fluide, **caractérisé en ce que** les moyens permettant d'étancher le coté d'afflux du côté d'écoulement de l'élément filtrant (13) dans une partie du boîtier (11) comprennent un joint circulaire, ce joint circulaire étant disposé en forme de collerette annulaire (20) sur une face frontale de l'élément filtrant (13), étant relié par une section axiale avec la surface latérale (19) de l'élément filtrant (13) et une partie de la collerette annulaire (20) s'étendant au-delà de la face frontale de l'élément filtrant (13) et, en outre, un élément de cadre (21 a, b, c) étant relié avec la partie de la collerette annulaire (20) en saillie en sens axial, de sorte que l'élément de cadre (21 a, b, c) fasse office d'appui contre les forces agissant de l'extérieur en sens radial sur la collerette annulaire (20), le joint circulaire étant constitué d'un élastomère et étant coulé ou injecté sur la surface latérale (19) de l'élément filtrant (13), l'élément de cadre (21 a, b, c) étant incorporé dans le joint sur au moins deux côtés et relié à ce joint de façon crabotée de telle manière que l'incorporation ait lieu lors du coulage ou de l'injection du joint sur la surface latérale (19).

2. Elément filtrant selon l'une des revendications précédentes, **caractérisé en ce que** le joint est constitué d'un élastomère thermoplastique (TPE).

3. Elément filtrant selon la revendication 1, **caractérisé en ce que** le joint est constitué d'une mousse PU.

4. Elément filtrant selon l'une des revendications précédentes, **caractérisé en ce qu'**essentiellement la partie du joint en saillie en sens axial soit en prise étanche sur une surface correspondante d'un boîtier destiné à réceptionner l'élément filtrant (13).

5. Elément filtrant selon l'une des revendications précédentes, **caractérisé en ce que** la surface d'étanchéité extérieure du joint soit essentiellement parallèle à la surface latérale (19) de l'élément filtrant (13).

6. Elément filtrant selon l'une des revendications 1 à 5, **caractérisé en ce que** la surface d'étanchéité extérieure du joint ait une forme s'amincissant de façon conique en direction de l'extrémité axiale libre.

7. Procédé d'entretien d'un filtre à air, présentant un boîtier avec une surface d'étanchéité annulaire intérieure, **caractérisé en ce qu'**un élément filtrant selon l'une des revendications 1 à 6 est inséré en sens axial dans le boitierjusqu'à obtention d'un assemblage étanche en sens radial entre le boîtier de filtre et la collerette annulaire du joint de l'élément filtrant.
